# EUROPÄISCHE PATENTSCHRIFT

(11) **EP 2 781 572 B1**
(45) Veröffentlichungstag und Bekanntmachung des Hinweises auf die Patenterteilung: **22.04.2020**
(21) Anmeldenummer: 14160696.2
(22) Anmeldetag: 19.03.2014
(51) Int. Cl.: C09J 7/29, G09F 3/10, B32B 7/04, B32B 7/12

(54) **Mehrschichtiges Laminat**
Multilayer laminate
Stratifié multicouche

(30) Priorität: 19.03.2013 DE 102013204834
(43) Veröffentlichungstag der Anmeldung: 24.09.2014
(73) Patentinhaber: Herma GmbH, 70794 Filderstadt (DE)
(72) Erfinder: Gablowski, Marcus, 72116 Mössingen (DE); Nägele, Ulli, 72072 Tübingen (DE)
(74) Vertreter: DREISS Patentanwälte PartG mbB

(56) Entgegenhaltungen:
- WO-A1-01/32796
- WO-A2-01/96488
- WO-A2-2009/158234
- "Pruefung von Schmierstoffen - Bestimmung der Scherviskositaet von Schmierfetten mit dem Rotationsviskosimeter - Teil 1: Messsystem Kegel/Platte", DIN 51810-1,, 1. Juli 2007 (2007-07-01), Seite 11pp, XP009178403,
- "Polymer Products from Aldrich Thermal Transitions of Homopolymers: Glass Transition & Melting Point", , 1 January 2013 (2013-01-01), XP055117588, Retrieved from the Internet: URL:http://www.sigmaaldrich.com/img/assets /3900/Thermal_Transitions_of_Homopolymers. pdf [retrieved on 2014-05-13]
- "Standard Test Method for TRANSITION TEMPERATURES OF POLYMERS BY THERMAL ANALYSIS", ASTM DESIGNATION, ASTM INTERNATIONAL, US, vol. 3418-82, 1 January 1982 (1982-01-01), pages 867-872, XP001537767,

## Beschreibung

Die Erfindung betrifft ein mehrschichtiges Laminat, wie in Anspruch 1 definiert, (Mehrschichtlaminat) aus einem Sichtmaterial sowie mindestens zwei Haftklebstoffschichten. Die Haftklebstoffschichten umfassen jeweils eine Haftklebstoffzusammensetzung. Haftklebstoffe werden zur Herstellung von selbstklebenden Artikeln, wie Etiketten, Klebebändern oder selbstklebenden Folien verwendet. Die selbstklebenden Artikel bestehen dabei in aller Regel aus mehreren Schichten, insbesondere einem Sichtmaterial, einer Haftklebstoffschicht und einer ablösbaren Antihaftschicht, welche die Haftklebstoffschicht bis zu ihrer Verwendung schützt.

Ein üblicher Haftklebeetikettenaufbau, auch Haftverbund genannt, ist mit einem Sichtmaterial, einer Klebstoffschicht, welche permanent auf dem Sichtmaterial verankert ist, sowie einer der Klebstoffschicht zugewandten Antihaftschicht, welche wiederum auf einem Abdeckmaterial permanent verankert ist, ausgestattet.

Darüber hinaus ist es auch bekannt, mehrschichtige Klebstoffaufbauten vorzusehen. So beschreibt beispielsweise die EP 0 781 198 B1 einen mehrschichtigen Klebstoffaufbau mit einem Sichtmaterial, einer Barriereschicht auf dem Sichtmaterial und einer Klebstoffschicht auf der Barriereschicht, wobei diese Klebstoffschicht eine wenigstens einen wandernden organischen Stoff enthaltende Polymerzusammensetzung umfasst, und die Barriereschicht einen Haftklebstoff umfasst und so ausgebildet ist, dass sie die Wanderung der wandernden organischen Verbindung aus der Klebstoffschicht zu dem Sichtmaterial minimiert.

Ferner beschreibt auch die EP 0 793 542 B1 eine entfernbare Haftklebekonstruktion mit einem Rücken sowie zwei Haftklebstoffschichten, nämlich einer Schicht mit einem permanenten Haftklebstoff und einer Schicht mit einem entfernbaren Haftklebstoff, die unmittelbar aufeinander aus einer Doppeldüse aufgebracht werden, wobei das Aufbringen auf eine Trennschicht erfolgt und anschließend diese Unterkonstruktion bestehend aus Trennfläche und den zwei Haftklebstoffschichten auf einen Rücken auflaminiert wird. Alternativ kann auch ein Aufbringen der Klebstoffschichten auf den Rücken erfolgen und ein späteres Auflaminieren der Trennschicht.

Das Aufbringen zweier Haftklebstoffschichten in einem Verfahrensschritt, wie es in den beiden vorgenannten Entgegenhaltungen beschrieben ist, ergibt sich ebenfalls aus der DE 19 28 031 sowie der US 3,508,947.

Grundsätzlich ist es dabei im Stand der Technik bekannt, in sogenannten Hochgeschwindigkeitsbeschichtungseinrichtungen entsprechende Haftklebstoffe auf eine Trenn- oder Sichtschicht aufzubeschichten, wobei hierzu häufig niederviskose Systeme eingesetzt werden. Aus ökologischen Gesichtspunkten und auch aus Sicherheitsaspekten werden hierbei wässrige Systeme, z. B. Acrylatdispersionen, bevorzugt eingesetzt. Hierbei werden bei der Herstellung von Haftklebeetiketten verschiedene Verfahren verwendet, wie beispielsweise Druckkammerrakel oder Curtain-Coater. Meist wird damit lediglich eine Schicht aus einer Haftklebstoffzusammensetzung in Form einer Lage aufbeschichtet. Nachteilig hierbei ist jedoch bei der Verwendung der oben genannten Acrylatdispersionen, dass sich aufgrund deren Aufbau nur eine eingeschränkte mechanische, thermische und chemische Beständigkeit ergibt.

Ferner ist aus der EP 2 018 411 B1 die Herstellung eines doppelseitigen Klebebands bekannt, bei dem ein mehrschichtiges Laminat bestehend aus zwei Haftklebstoffschichten und einer zwischen den Haftklebstoffschichten liegenden Trägerschicht in einem Beschichtungsvorgang hergestellt wird, wobei die Glasübergangstemperatur der Trägerpolymere der Zusammensetzung der Trägerschicht größer 0° C ist. Auf beide Haftklebeschichten wird dann auf der Seite, die nicht mit der Trägerschicht zusammenwirkt, danach noch eine Ablöse- oder Trennschicht aufgebracht.

Weiterhin ist aus der WO 2001/96488 A2 eine Gestaltung aus einem Sichtmaterial, auf dem ein dreilagiger Kleber aufgebracht ist, bekannt, wobei es sich um eine FSA- sowie eine LSA-Schicht und eine dazwischen angeordnete klebende Zwischenschicht handelt.

Die WO 2009/158234 A2 offenbart des Weiteren ein Substrat, auf das ein erster Haftkleber aufgebracht ist, worauf eine sogenannte Schrumpffilmschicht und dann ein zweiter Haftkleber appliziert werden. Der erste und der zweite Haftkleber können dabei aus dem gleichen Material aufgebaut sein, wobei die Schrumpffilmschicht dazu dient, dem System Stabilität zu geben, damit es selbsttragend ist.

Schließlich beschreibt die WO 01/32796 eine Gestaltung mit einem Sichtmaterial, mit einem zweiten Haftkleber, einem Verbundhaftkleber und noch einmal einem zweiten Haftkleber, wobei es sich bei der mittleren Schicht um einen PSA-Klebstoff mit synthetischen Elastomeren handelt.

Ausgehend vom bekannten Stand der Technik ist es nun Aufgabe der Erfindung, ein mehrschichtiges Laminat bereitzustellen, wobei das Laminat insbesondere für ein Haftklebeetikett verwendet werden soll und mit einem Abdeckmaterial ausstattbar ist, bei welchem die Vorzüge eines Flüssigsystems, vorzugsweise eines wässrigen Systems, mit verbesserten mechanischen, thermischen und chemischen Beständigkeiten vereint werden können.

Die Aufgabe wird gelöst durch ein mehrschichtiges Laminat mit den Merkmalen des Anspruchs 1 sowie ein Verfahren mit den Merkmalen des Anspruchs 18 und eine Verwendung mit den Merkmalen des Anspruchs 19.

Dabei ist vorgesehen, dass das mehrschichtige Laminat aus zwei Haftklebstoffschichten und einer zwischen den Haftklebstoffschichten angeordneten Zwischenlage besteht, wobei die Zwischenlage eine Zwischenlagenzusammensetzung mit einem oder mehreren Bindemitteln umfasst und die Haftklebstoffschichten jeweils eine Haftklebstoffzusammensetzung umfassen. Bei den Bindemitteln der Zwischenlage handelt es sich um Elastomere, wobei das mindestens eine Bindemittel der Zwischenlage bei Raumtemperatur von 21 °C nicht klebrig ist und die Zwischenlage nicht klebend ausgebildet ist. Die Glasübergangstemperatur der Zusammensetzung der Zwischenlage ist dabei kleiner als 0° C.

Die einzelnen Schichten weisen vorzugsweise die gleiche Ausdehnung in Flächenrichtung auf und überdecken einander vollflächig. Insbesondere sind alle Schichten vollflächig ausgebildet.

Es ist bekannt, dass Elastomere, also mäßig dreidimensional vernetzte Polymere, signifikant höhere Beständigkeiten gegen mechanische, thermische und chemische Einflüsse besitzen als lediglich verzweigte, zweidimensionale Polymere. Derartig dreidimensional vernetzte Polymere werden als Bindemittel für die Zwischenlage verwandt.

Haftklebstoffe bestehen üblicherweise aus einer Vielzahl von Komponenten, deren Hauptkomponente das Bindemittel, jedoch fast ausschließlich aus verzweigten Polymeren, also zweidimensionalen Polymeren, besteht. Dreidimensional vernetzte Systeme hingegen sind meist bei Raumtemperatur nicht oder nur schwach haftklebend.

Höhere mechanische Beständigkeiten äußern sich u. a. in signifikant höheren Reißfestigkeiten und Zug-/Dehnungsbelastbarkeiten. Die Anfälligkeit gegen chemische Einflüsse ist stark vermindert. Die Löslichkeit von Elastomeren in polaren wie auch in apolaren Lösungsmitteln ist nur sehr eingeschränkt und es erfolgt meist nur ein leichtes Quellen des Systems. Da ein Elastomer keinen Schmelzpunkt besitzt, sind die mechanischen Eigenschaften über ein sehr breites Temperaturfenster deutlich konstanter als dies bei lediglich verzweigten Polymeren der Fall ist.

Durch die Vorsehung der genannten Zwischenlage mit einer Glasübergangstemperatur von kleiner 0° C, einer selbst nicht klebenden Lage zwischen den zwei Haftklebstoffschichten, können die Eigenschaften des Gesamtlaminats bestehend aus den zwei Haftklebstoffschichten und der Zwischenlage positiv hinsichtlich der mechanischen, thermischen und chemischen Beständigkeit verändert werden, ohne die Haftklebstoffschichten selber entsprechend modifizieren zu müssen, was dann gegebenenfalls zu einer nachteiligen Veränderung der Klebrigkeit führen könnte.

Die erfindungsgemäße Zwischenlage umfasst dabei ein oder mehrere Bindemittel und besitzt eine Glasübergangstemperatur, welche im fertigen mehrschichtigen Laminat, also im Gebrauchszustand, kleiner als 0° C ist.

Die niedrige Glasübergangstemperatur (Tg) ist entscheidend, da bei höheren Werten die rheologischen Eigenschaften der einzelnen Haftklebstoffschichten voneinander getrennt werden bzw. die Haftklebstoffschichten bezüglich ihrer Klebeeigenschaften voneinander entkoppelt sind. Solch dreidimensionale Polymere mit einer Glasübergangstemperatur Tg < 0° C bilden eine sehr weiche Zwischenlage, da die Polymere weitmaschig vernetzt sind. Auf diese Weise bleibt die mechanische Stabilität erhalten, ohne dass die vorstehend beschriebene Entkopplung der Klebstoffschichten erfolgt. Durch die vernetzte Zwischenlage entsteht der weitere Vorteil eines deutlich verminderten Kriechverhaltens bzw. Klebstoffblutens. Durch den gewählten Aufbau aus zwei Haftklebstoffschichten und einer dazwischen angeordneten Zwischenlage zeigen - wenn überhaupt - nur die beiden Haftklebstoffschichten eine Kriechneigung. Das heißt bei gleichen Klebeeigenschaften wie eine Klebstoffschicht mit dem Auftragsgewicht aller drei Schichten zusammen genommen, fällt das Kriechen deutlich reduziert aus. Die Möglichkeit einer Vorsehung von geringen Schichtdicken sowohl der Haftklebstoffschichten als auch der Zwischenlage kann nur erreicht werden durch eine stark bewegliche Zwischenlage und damit sehr geringen Glasübergangstemperatur der Zwischenlage. Auf diese Weise können auch bei geringen Schichtdicken weiterhin hervorragende Klebeeigenschaften erzielt werden. Zwar sind auf der einen Seite geringe Schichtdicken wünschenswert, jedoch besteht bei zu geringen Schichtdicken das Problem, dass Rauhigkeiten des Untergrunds nicht mehr hinreichend mit dem Haftkleber in Kontakt treten. Durch die nicht starre Zwischenlage kann die Schichtdicke der mit einem Untergrund in Kontakt kommenden Haftklebeschicht gering gehalten werden.

Als Bindemittel für die Zwischenlage kommen alle solchen Bindemittel in Betracht, welche in der Lage sind, Quervernetzungen auszubilden. Dabei werden unter dem Begriff "Vernetzung" stets dreidimensionale vernetzte Polymere im Vergleich zu zweidimensionalen verzweigten Polymeren verstanden. Dies sind beispielsweise Komponenten aus der Reihe der (Poly-)Acrylate, der (Poly-)Urethane, der Isocyanate, der Epoxide, der Amine, der (Poly-)Ester, der (Poly-)Alkohole, der (Poly-)Carbonsäuren oder Mischungen der vorgenannten Komponenten. Das Bindemittel kann sowohl Monomere als auch Oligomere oder Polymere oder eine Mischung aus Monomeren, Oligomeren und Polymeren enthalten, wobei stets dreidimensional vernetzte Polymere umfasst sind.

Alle Bindemittel, welche im Gebrauchszustand ein Elastomer sind, d. h. einen dreidimensionale Vernetzung aufweisen, welche jedoch bei Raumtemperatur (21° C) eine ausreichende Beweglichkeit des Systems zulassen, werden als geeignet betrachtet. Dies sind Bindemittel mit einer Glasübergangstemperatur von Tg ≤ 0°.

Die Vernetzung wird dabei durch Abgabe von Lösungsmittel, z. B. Wasser oder organisches Lösungsmittel, thermisch oder durch Strahlung, z. B. durch ultraviolettes Licht, Elektronenstrahlen, Mikrowellen oder infrarote Strahlung, ausgelöst. Denkbar ist auch eine schallinduzierte Vernetzung, z. B. durch Ultraschall.

Die Zwischenlagenzusammensetzung kann dabei aus einem oder mehreren Bindemitteln bestehen, aber auch weitere Zusatzstoffe enthalten. In Betracht kommen hier beispielsweise Katalysatoren zur Erhöhung der Vernetzungsgeschwindigkeit, Füllstoffe, Rheologieadditive, Farbstoffe oder Pigmente, oberflächenaktive Substanzen, Weichmacher oder Materialien, die den Reaktionsverlauf steuern. Dabei besteht die Zwischenlage bevorzugt zu mehr als 80 %, weiter bevorzugt zu mehr als 90 % und besonders bevorzugt zu mehr als 95 % aus den genannten Bindemitteln.

Das Bindemittel der Zwischenlage ist im abreagierten Zustand bei Raumtemperatur (21° C) kaum, vorzugsweise nicht klebrig. Insbesondere handelt es sich vorzugsweise nicht um einen Haftklebstoff. Insbesondere kann es sich um eine PU-Dispersion als Bindemittel handeln.

Dabei ist besonders bevorzugt vorgesehen, dass die Glasübergangstemperatur zumindest bevorzugt kleiner oder gleich -10° C und insbesondere kleiner oder gleich -20° C ist. Gleichzeitig soll die Glasübergangstemperatur der Zwischenlage größer oder gleich -70° C und vorzugsweise größer oder gleich -60° C sein. Bevorzugt ist ein Bereich von 0° C bis -70° C, bevorzugt von -10° C bis -70° C und besonders bevorzugt von - 20° C bis -60° C.

Ebenfalls ist dabei vorgesehen, dass die Glasübergangstemperatur von Haftklebstoffpolymeren, die Teil der Haftklebstoffzusammensetzung sind, vorzugsweise kleiner oder gleich +10°, besonders bevorzugt kleiner oder gleich 0° C und besonders bevorzugt kleiner oder gleich -10° C und besonders bevorzugt kleiner oder gleich -20° C bzw. besonders bevorzugt kleiner gleich -30° C sind. Als Untergrenze ist dabei -70° C für die Glasübergangstemperatur anzusehen. Vorzugsweise liegt der Bereich bei +10° C bis -70° C, bevorzugt -10° C bis -70° C, bevorzugt -20° C bis -70° C und weiter bevorzugt -30° C bis -70° C.

Besonders bevorzugt ist dabei vorgesehen, dass die Glasübergangstemperatur der Zwischenlage ähnlich der Glasübergangstemperatur der Haftklebstoffpolymere ist, insbesondere der Haftklebstoffpolymere der Haftklebstoffschicht, die, sofern vorgesehen, einer Trennschicht oder Abdeckschicht zugewandt ist und damit im Verwendungsfall mit dem Substrat in Kontakt steht. Auf diese Weise wird erreicht, dass die Haftklebstoffschichten und die Zwischenlage ähnliche Fließfähigkeit besitzen und das gesamte Laminat normale haftklebende Eigenschaften aufweist. Insbesondere weist die Glasübergangstemperatur der Zwischenlage einen Temperaturunterschied von 0 bis 30 K und vorzugsweise von 0 bis 20 K und insbesondere von 0 bis 10 K von der Glasübergangstemperatur der Haftklebstoffschichten, insbesondere gegenüber einer der Haftklebstoffschichten, auf.

Dabei enthält das erfindungsgemäße mehrschichtige Laminat mindestens zwei Haftklebstoffschichten, wobei jede der Haftklebstoffschichten eine Haftklebstoffzusammensetzung aufweist, die wenigstens ein Haftklebstoffpolymer enthält. Die Begriffe Haftklebstoffe und Haftklebstoffzusammensetzung wurden synonym verwendet. Bei einem Haftklebstoff handelt es sich um einen bei Raumtemperatur (21° C) dauerhaft klebrigen Klebstoff.

Die nachfolgenden Erläuterungen gelten für die Haftklebstoffzusammensetzungen beider Schichten, soweit nicht konkret auf eine der Schichten Bezug genommen ist.

Als Basis für die Haftklebstoffzusammensetzung kommen radikalisch polymerisierte Polymere, Polyester oder Polyaddukte in Betracht, besonders bevorzugt durch Emulsionspolymerisation erhältliche Polymere.

Übliche Polymerzusammensetzungen für Acrylatdispersionen sind beispielsweise aus der DE 2 459 160, der EP 0 625 557 B1 sowie der EP 0 952 199 bekannt.

Weiterhin können auch synthetische und natürliche Kautschuksysteme zu Einsatz kommen. Ferner Haftklebstoffzusammensetzungen, deren Eigenschaften durch photochemische Vernetzung, z. B. durch Bestrahlung mit Elektronenstrahlung oder UV-Licht, eingestellt werden können, z. B. AcResin® der Firma BASF, Ludwigshafen, Deutschland.

Weitere mögliche Polymere sind im Stand der Technik z. B. in Benedek, Feldstein: "Technology of Pressure Sensitive Adhesives and Products", 1-1 ff, Tailor and Francis Group 2009 sowie Satas (Et), "Handbook of Pressure Sensitive Adhesive Technology", Chapter 10-16, van Nostrand, 1982, bekannt.

Die wesentlichen Eigenschaften eines Haftklebstoffs bzw. einer Haftklebstoffzusammensetzung sind die Klebrigkeit, also die Adhäsion, und die innere Festigkeit, nämlich die Kohäsion derselben.

Die Haftklebstoffzusammensetzung kann dabei alleine aus dem oder den Haftklebstoffpolymer(en) oder noch weiteren Zusatzstoffen bestehen. Diese dienen meist der Einstellung der gewünschten Verarbeitungs- und/oder Anwendungseigenschaften. Hierzu werden u. a. Stoffe eingesetzt, die die Haftung erhöhen, sogenannte Tackifier, oder regulieren, z. B. Weichmacher. Bevorzugte Tackifier sind natürliche oder chemisch modifizierte Kolophoniumharze. Kolophoniumharze bestehen zum überwiegenden Teil aus Abietinsäure oder Abietinsäurederivaten. Diese können in ihrer Salzform, mit z. B. ein- oder mehrwertigen Gegenionen (Kationen), oder bevorzugt in ihrer veresterten Form, vorliegen. Alkohole, die zur Veresterung verwendet werden können, können ein- oder mehrwertig sein. Beispiele sind Methanol, Ethanol, Diethylenglykol, Triethylenglykol, 1,2,3-Propan-Triol, Pentaerytrit. Weitere Tackifier können auch synthetische Systeme sein.

Weitere Additive, welche der Haftklebstoffzusammensetzung zugesetzt werden können, sind z. B. Antioxidantien, Füllstoffe, Farbstoffe, Verdicker und Verlaufshilfsmittel.

Die Haftklebstoffzusammensetzung besteht, abgesehen von Wasser oder sonstigen Lösungsmitteln, insbesondere zu mehr als 40 Gew.-%, besonders bevorzugt zu mehr als 60 Gew.-% und weiter besonders bevorzugt zu mehr als 70 Gew.-% aus dem Haftklebstoffpolymer, worunter auch Mischungen von unterschiedlichen Haftklebstoffpolymeren zu verstehen sind.

Dem Fachmann ist es bekannt, wie die jeweils gewünschten Haftklebstoffeigenschaften eingestellt werden können. Bei Verwendung von vernetzten Haftklebstoffpolymeren erhöht sich die innere Festigkeit des Haftklebstoffs bzw. der Haftklebstoffzusammensetzung, im Allgemeinen zum Nachteil der Klebrigkeit. Selbstklebende Artikel, welche mit derartigen Haftklebstoffzusammensetzungen beschichtet sind, sind in der Regel rückstandsfrei wieder ablösbar. Andere Haftklebstoffzusammensetzungen haben durch Mitverwendung von sehr polaren Monomeren und gegebenenfalls größeren Mengen Tackifier eine sehr hohe Klebrigkeit. Derartig ausgerüstete Artikel können kaum wieder abgelöst werden, ohne beschädigt zu werden, so dass sie als permanente Haftklebstoffzusammensetzungen bezeichnet werden können. Darüber hinaus ändert die Verwendung von vernetzten Systemen auch die mechanische, thermische und chemische Beständigkeit der Haftklebstoffzusammensetzung.

In dem erfindungsgemäßen Laminat können beliebige Haftklebstoffzusammensetzungen miteinander kombiniert werden. Es kann sich bei beiden Haftklebstoffschichten um ablösbare oder um permanente Haftklebstoffe handeln. Es kann sich aber auch bei einer der beiden Haftklebstoffschichten um einen ablösbaren Haftklebstoff handeln und bei dem anderen um eine Schicht mit einem permanenten Haftklebstoff.

Die Schichtdicke der Haftklebstoffschichten kann dabei 1 bis 100 µm, bevorzugt mindestens 3 µm und weiter bevorzugt mindestens 5 µm betragen, wobei die maximale Schichtdicke vorzugsweise weniger als 60 µm und weiter vorzugsweise weniger als 40 µm beträgt. Die Dicke der Zwischenlage kann insbesondere 1 bis 100 µm betragen, insbesondere beträgt sie mindestens 2 µm und weiter bevorzugt mindestens 4 µm und im Allgemeinen ist die Dicke nicht größer als 50 µm, besonders bevorzugt nicht größer als 30 µm.

Die Haftklebstoffzusammensetzung und die Zwischenlagenzusammensetzung liegen vorzugsweise bei Raumtemperatur flüssig vor. Es kann sich um 100 %-Systeme, eine Lösung in Wasser oder organischem Lösemittel, eine Dispersion oder ein Plastisol handeln. Bei 100 %-Systemen handelt es sich um Zusammensetzungen, welche im Verarbeitungszustand flüssig sind und welche ohne Abgabe einer Komponente der Zusammensetzung unter Erhöhung der Viskosität und/oder des elastischen Anteils miteinander reagieren.

Dabei ist eine der Haftklebstoffschichten insbesondere permanent, d. h. unlösbar, auf einem Sichtmaterial verankert. Das Sichtmaterial besteht dabei insbesondere aus Papier oder Folie und weist vorzugsweise eine Dicke von kleiner 200 µm auf.

Das mehrschichtige Laminat enthält vorzugsweise weitere Schichten. Insbesondere können die Haftklebstoffschichten mit einer Antihaftschicht oder auch Trennschicht abgedeckt sein, bei der eine nichthaftende, d. h. ablösbare Seite zur Haftklebstoffschicht hin gerichtet ist. Bei der Antihaft- oder Trennschicht handelt es sich hier insbesondere um ein silikonisiertes Papier oder eine silikonisierte Folie. Die Antihaft- oder Trennschicht soll die Haftklebstoffschicht bis zur Verwendung schützen. Unmittelbar vor der Verwendung wird die Antihaft- oder Trennschicht entfernt.

Das mehrschichtige Laminat besitzt vorzugsweise eine Dicke von 25 µm - 2 mm, vorzugsweise von 30 µm - 500 µm und besonders bevorzugt von 40 µm - 200 µm, alle Schichten und Sichtmaterial ohne Trennschichten.

Darüber hinaus kann vorgesehen sein, dass die freie Haftklebeschicht, die dem Sichtmaterial abgewandt ist, nicht abgedeckt ist, so dass auf eine Antihaftschicht verzichtet werden kann, da die freie Haftstoffklebeschicht beim Aufrollen in Kontakt mit dem Sichtmaterial tritt und dieses dann beide Haftklebstoffschichten schützt.

Dabei kann die Glasübergangstemperatur der Polymere, sowohl der Haftklebstoffschichten als auch der Zwischenlage, mit den üblichen Methoden, wie Differentialthermoanalyse oder Differentialscanningkalometrie, z. B. nach ASTM 3418/82 sogenannte "Midpointtemperatur", bestimmt werden.

Ferner ist festzustellen, dass bei einer elastomeren Zwischenlage und bei Kenntnis ihrer Fließeigenschaften eine Erhöhung der Belastbarkeit (mechanisch, thermisch, chemisch) stark vom elastischen Anteil (Speichermodul G') abhängt. Üblicherweise führt eine Erhöhung des elastischen Anteils zur Verbesserung der genannten Belastbarkeiten.

Als Merkmal für die Wirksamkeit der Erfindung ist dementsprechend der Anteil des Speichermoduls G' am Gesamtsystem entscheidend. Häufig wird bei rheologischen Experimenten der Verlustfaktor tan δ zur Einschätzung herangezogen. Dieser stellt ein Verhältnis zwischen viskosem Anteil (Verlustmodul G") und elastischem Anteil (Speichermodul G') dar. Definiert als tan δ = G" / G'. D. h., je kleiner der Wert für tan δ, desto höher der elastische Anteil und umso weniger fließfähig ist das Material der Zwischenlage.

Die Messung des tan δ erfolgt dabei wie folgt:
Einbringen einer trockenen Probe der Zwischenlagenzusammensetzung in eine 5 mm-Durchmesser Platte/Plattegeometrie (Rheometer mit geeigneter Messgenauigkeit, Anton Paar, MCR 301 (Hersteller Anton Paar Germany GmbH, Ostfildern, Deutschland). Schichtstärke 50 bis 500 µm. Temperieren der Messaufbau und Probe auf 20° C ± 0,1° C, relative Luftfeuchte 50 % ± 5 %. Messung mit einer Kreisfrequenz ω= 100 bis 1 rad/sec.

Dem Fachmann ist bewusst, dass die Messung nur bei geeigneter kleiner Amplitude bzw. im linear-viskoelastischen Bereich zulässig ist. Dieser ist vorab über einen Amplitudensweep zu ermitteln. Die verwendete Methode ist z. B. in der DIN 51810-1 beschrieben. Die Zwischenlagenzusammensetzung hat erfindungsgemäß im Gebrauchszustand nach obigem Messaufbau bzw. Messablauf bei 20° C im Frequenzbereich ω = 100 bis 1 rad/sec. einen Verlustfaktor von tan δ von vorzugsweise kleiner 0,8, besonders bevorzugt kleiner 0,4 und ganz besonders bevorzugt kleiner 0,3. Je kleiner der Wert ausfällt, desto weniger fließfähig und umso härter ist die Zwischenlagenzusammensetzung. Durch eine bevorzugte Kombination einer Glasübergangstemperatur <0° C und einem tan δ <0,8, ergibt sich eine sehr weiche, aber nicht fließfähige Zwischenlage, die eine hohe mechanische Belastbarkeit aufweist und dünn ausgestaltet sein kann.

Der mehrschichtige Haftverbund ist durch ein Beschichtungsverfahren erhältlich, bei dem Haftklebstoffe und die Zwischenlagenzusammensetzung als wässrige Dispersion, Lösung oder flüssiges 100 %-System vorliegen und beschichtet werden. Vorzugsweise erfolgt die Beschichtung auf eine Antihaftschicht, z. B. ein silikonisiertes Papier oder Folie und anschließend Trocknen der Beschichtung. Die Beschichtung der Haftklebstoffschichten und der Zwischenlage erfolgt vorzugsweise in einem Arbeitsgang. Anschließend erfolgt dann die Laminierung mit dem Sichtmaterial

Hierzu kann eine Mehrfachkaskadendüse eingesetzt werden.

Ein dazu geeignetes Beschichtungsverfahren ist beispielsweise aus der US 3,508,947 vorbekannt.

Das mehrschichtige Laminat wird dabei bevorzugt durch ein Verfahren hergestellt, bei dem die mindestens drei fließfähigen Zusammensetzungen (zwei Haftklebstoffzusammensetzungen und eine Zwischenlagenzusammensetzung) kontinuierlich auf ein bahnförmiges Substrat, vorzugsweise eine Antihaft- oder Trennschicht, beschichtet werden. Dabei erfolgt die Beschichtung unter Verwendung einer Mehrfachkaskadendüse.

Die Beschichtungsgeschwindigkeit beträgt bevorzugt 30 bis 1500 m/min, besonders bevorzugt 150 bis 1200 und ganz besonders bevorzugt 300 bis 1200 m/min.

Die Haftklebstoffzusammensetzung und die Zwischenlagenzusammensetzung befinden sich in unterschiedlichen Behältnissen und werden aus diesen als flüssiger Film gespeist.

Wesentliches Merkmal der Mehrfachkaskadendüse ist, dass aus den einzelnen zu beschichtenden Filmen ein Gesamtfilm gebildet wird. In diesem Gesamtfilm liegen die einzelnen Filme in der räumlichen Anordnung vor, wie sie später in dem mehrschichtigen Laminat gewünscht sind. Der Gesamtfilm wird von der Mehrfachkaskadendüse auf den sich bewegenden bahnförmigen Träger gegeben.

Vorzugsweise handelt es sich bei dem Verfahren um ein Slidecoatingverfahren. Beim Slidecoating gleitet der Gesamtfilm über eine Fläche, z. B. Metallfläche (sliding) und wird danach auf das Substrat abgelegt.

Im Gegensatz dazu wird der Gesamtfilm bei einem Slotcoatingverfahren aus einem Schlitz oder einer Düse direkt, d. h. ohne Sliding, auf das Substrat gegeben.

Bevorzugt handelt es sich weiterhin um ein Vorhangbeschichtungsverfahren (Curtain coating). Beim Vorhangbeschichtungsverfahren wird ein frei fallender Filmvorhang auf dem Substrat abgelegt. Damit der Filmvorhang frei fallen kann, muss der Abstand zwischen Düse oder sonstiger Austrittsöffnung und dem sich bewegenden Substrat größer als die zu beschichtende Schichtdicke sein.

Besonders bevorzugt handelt es sich um ein Slidecoatingverfahren in Kombination mit einem Vorhangbeschichtungsverfahren.

Das mehrschichtige Laminat eignet sich als selbstklebender Artikel, insbesondere als Etikett.

Die Erfindung erlaubt die Herstellung von selbstklebenden Artikeln, insbesondere Etiketten, aber auch Klebebändern, und Klebefolien, welche eine erhöhte Beständigkeit gegenüber thermischer, mechanischer und chemischer Belastung aufweisen.

Es hat sich gezeigt, dass mit dem beschriebenen Aufbau die Reißfestigkeit eines Haftverbunds signifikant erhöht werden kann. Die thermische Beständigkeit erhöht sich durch den Einsatz der elastomeren Zwischenlage ebenfalls. Dabei ist die chemische Beständigkeit eines dreidimensional vernetzten Elastomers größer als die eines lediglich verzweigten Polymers, so dass die Beständigkeit gegen chemische Einflüsse, aber auch gegen die Wasserquellbarkeit deutlich gesteigert wird. Die Wanderung migrationsfähiger Bestandteile aus dem und/oder in das Sichtmaterial ist durch die dreidimensionale Vernetzung der Zwischenlage stark vermindert. Ebenso die Migration von beweglichen Komponenten einer auf das Sichtmaterial aufgebrachten Beschichtung, z. B. eines Aufdrucks in die Haftklebschicht.

Durch den Einsatz einer Zwischenlage mit einer Glasübergangstemperatur kleiner 0° C werden die Klebeeigenschaften der einzelnen Haftklebstoffschichten nicht vollständig voneinander entkoppelt, so dass mit geringen Schichtdicken bereits hervorragende Klebeeigenschaften erzielt werden können.

Besonders bevorzugt ist dabei folgender beispielhafter Aufbau:
Sichtmaterial: 72 g/m² Vellum-Papier
Erste Haftschicht: 5 µm Acronal V215, BASF SE, Ludwigshafen, Deutschland
Zwischenlage: 5 µm Luphen D207 E PU-Dispersion, BASF SE, Ludwigshafen, Deutschland
Zweite Haftschicht: 9 µm Acronal V215 + 25 % Harz Dispersion (Tackifier, z. B. Eastman MBG519 Eastman, Middleburg, NL).

In der Zeichnung ist nun ein erfindungsgemäßer Aufbau dargestellt.

Dabei zeigt:
- Figur 1: einen Aufbau gemäß dem Stand der Technik und
- Figur 2: einen erfindungsgemäßen Aufbau.

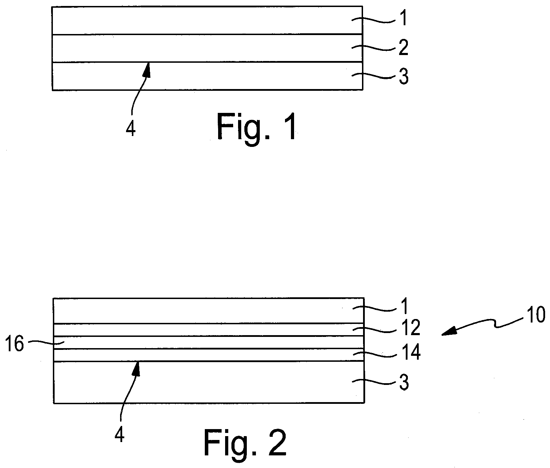

Figur 1 zeigt einen Aufbau eines herkömmlichen Etiketts mit einem Sichtmaterial 1, einer Haftklebstoffschicht 2 sowie einem Abdeckmaterial 3 mit Trennschicht 4.

Figur 2 zeigt nun einen Aufbau, bei dem ebenfalls Sichtmaterial 1 und Abdeckmaterial 3 mit Trennschicht 4 vorgesehen sind. Anstelle der Haftklebstoffschicht ist jedoch ein Mehrschichtlaminat 10 bestehend aus zwei

Haftklebstoffschichten 12, 14 sowie einer dazwischen angeordneten Zwischenlage 16 vorgesehen, wobei die Zwischenlage 16 eine Glasübergangstemperatur kleiner 0° C aufweist.

## Patentansprüche

1. Mehrschichtiges Laminat (10) aus einem aus einer Folie oder einem Papier bestehenden Sichtmaterial (1) sowie mindestens zwei Haftklebstoffschichten (12, 14), wobei die Haftklebstoffschichten (12, 14) jeweils eine Haftklebstoffzusammensetzung umfassen, **dadurch gekennzeichnet, dass** zwischen den Haftklebstoffschichten (12, 14) eine Zwischenlage angeordnet ist, wobei die Zwischenlage (16) eine Zwischenlagenzusammensetzung mit einem oder mehreren Bindemitteln umfasst, und dass die Zwischenlage eine Glasübergangstemperatur gemessen nach ASTM D 3418/82 kleiner 0°C aufweist, wobei die Bindemittel Elastomere sind und das mindestens eine Bindemittel der Zwischenlage (16) bei Raumtemperatur von 21°C nicht klebrig ist und die Zwischenlage (16) nicht klebend ausgebildet ist.

2. Mehrschichtiges Laminat nach Anspruch 1, **dadurch gekennzeichnet, dass** die Glasübergangstemperatur der Zwischenlage (16) kleiner oder gleich -10°C, und insbesondere kleiner oder gleich - 20°C ist.

3. Mehrschichtiges Laminat nach Anspruch 1 oder 2, **dadurch gekennzeichnet, dass** die Glasübergangstemperatur der Zwischenlage (16) größer oder gleich -70°C, insbesondere größer oder gleich -60°C ist.

4. Mehrschichtiges Laminat nach einem der vorangehenden Ansprüche, **dadurch gekennzeichnet, dass** die Glasübergangstemperatur wenigstens einer der Haftklebstoffschichten (12, 14) kleiner oder gleich +10°C, und insbesondere kleiner oder gleich 0°C und insbesondere kleiner oder gleich -20°C, insbesondere kleiner oder gleich -30°C ist.

5. Mehrschichtiges Laminat nach einem der vorangehenden Ansprüche, **dadurch gekennzeichnet, dass** die Glasübergangstemperatur mindestens einer der Haftklebestoffschichten (12, 14) größer oder gleich -70°C ist

6. Mehrschichtiges Laminat nach Anspruch 1, **dadurch gekennzeichnet, dass** die Glasübergangstemperatur der Zwischenlage(16) lediglich zwischen 0-30K und vorzugsweise von 0-20K und insbesondere 0-10 K von der Glasübergangstemperatur gemessen nach ASTM 3418/82 wenigstens einer der Haftklebstoffschichten (12, 14) abweicht.

7. Mehrschichtiges Laminat nach einem der vorangehenden Ansprüche, **dadurch gekennzeichnet, dass** als Bindemittel der Zwischenlage (16)(Poly-)Acrylate, (Poly-)Urethane, Isocyanate, Epoxide, Amine, (Poly-)Ester, (Poly-)Alkohole, (Poly-)Carbonsäuren oder Mischungen hiervon vorgesehen sind.

8. Mehrschichtiges Laminat nach einem der vorangehenden Ansprüche, **dadurch gekennzeichnet, dass** die Schichtdicke der Haftklebstoffschichten (12, 14) 1-100 µm, bevorzugt mindestens 3 µm und weiter bevorzugt mindestens 5 µm beträgt und die maximale Schichtdicke vorzugsweise weniger als 60 µm und weiter vorzugsweise weniger als 40 µm beträgt.

9. Mehrschichtiges Laminat nach einem der vorangehenden Ansprüche, **dadurch gekennzeichnet dass** die Schichtdicke der Zwischenlage (16) 1-100 µm, bevorzugt mindestens 2 µm und weiter bevorzugt mindestens 4 µm beträgt und die maximale Schichtdicke vorzugsweise weniger als 50 µm und weiter vorzugsweise weniger als 30 µm beträgt.

10. Mehrschichtiges Laminat nach einem der vorangehenden Ansprüche, **dadurch gekennzeichnet, dass** das Laminat (10) bestehend aus Sichtmaterial sowie den Haftklebstoffschichten und der Zwischenlage (16) gemeinsam eine Dicke von 25 µm bis 2 mm, vorzugsweise von 30 µm bis 500 µm und besonders bevorzugt von 40 µm bis 250 µm aufweist.

11. Mehrschichtiges Laminat nach einem der vorangehenden Ansprüche, **dadurch gekennzeichnet, dass** die Haftklebstoffzusammensetzung einer oder beider Haftklebstoffschichten vorzugsweise der Haftklebstoffschicht, die nicht mit dem Sichtmaterial verbunden ist, ein oder mehrere synthetische und/oder natürliche Polymere als Haftklebstoff-Polymer aufweist, sowie insbesondere Tackifier, Antioxidantien, Füllstoffe, Farbstoffe, Verdickungsmittel und/oder Verlaufhilfsmittel umfasst.

12. Mehrschichtiges Laminat nach einem der vorangehenden Ansprüche, **dadurch gekennzeichnet, dass** die Haftklebstoffzusammensetzung zu mindestens 40%, vorzugsweise zu mindestens 60% und weiter bevorzugt zu mindestens 70% aus einem oder mehreren HaftklebstoffPolymeren bestehen.

13. Mehrschichtiges Laminat nach einem der vorangehenden Ansprüche, **dadurch gekennzeichnet, dass** das Laminat (10) weitere Schichten, insbesondere eine ablösbare Antihaftschicht (3) auf der einen freien Seiten der Haftklebstoffschichten (12, 14) besitzt.

14. Mehrschichtiges Laminat nach einem der vorangehenden Ansprüche, **dadurch gekennzeichnet, dass** das Sichtmaterial (1) unlösbar mit der angrenzenden Haftklebeschicht verbunden ist.

15. Mehrschichtiges Laminat nach einem der vorangehenden Ansprüche, **dadurch gekennzeichnet, dass** das Sichtmaterial (1) eine Dicke von maximal 200 µm aufweist.

16. Mehrschichtiges Laminat nach einem der vorangehenden Ansprüche, **dadurch gekennzeichnet, dass** das Laminat (10) herstellbar ist durch Beschichtung der Haftklebstoffzusammensetzungen und der Zwischenlagenzusammensetzung mit einer Mehrfachkaskadendüse in einem Verfahrensschritt.

17. Mehrschichtiges Laminat nach einem der vorangehenden Ansprüche, **dadurch gekennzeichnet, dass** die Haftklebstoffzusammensetzung und die Zwischenlagenzusammensetzung als wässrige Dispersion, Lösung oder flüssiges 100%-System vorliegen.

18. Verfahren zur Herstellung eines mehrschichtigen Laminats nach einem der vorangehenden Ansprüche aus mindestens einem Sichtmaterial (10) sowie zwei Haftklebstoffschichten (12, 14), wobei die Haftklebstoffschichten (12, 14) jeweils eine Haftklebstoffzusammensetzung umfassen, **dadurch gekennzeichnet, dass** zwischen den Haftklebstoffschichten (12, 14) eine Zwischenlagenzusammensetzung mit einem oder mehreren Bindemitteln umfasst, und die Zwischenlage (16) eine Glasübergangstemperatur kleiner 0°C aufweist.

19. Verwendung eines mehrschichtigen Laminats nach einem der vorangehenden Ansprüche als Etikett oder als Klebeband oder als Klebefolie.

## Claims

1. Multilayer laminate (10) comprising a facestock material (1), consisting of a film or paper, and at least two adhesive substance layers (12, 14), wherein the adhesive substance layers (12, 14) each comprise an adhesive substance composition, **characterised in that** an intermediate layer is arranged between the adhesive substance layers (12, 14), wherein the intermediate layer (16) comprises an intermediate layer composition with one or more binders, and that the intermediate layer has a glass transition temperature measured to ASTM D 3418/82 of less than 0°C, wherein the binders are elastomers and the at least one binder of the intermediate layer (16) is not tacky at a room temperature of 21°C and the intermediate layer is not formed so as to be adhesive.

2. Multilayer laminate according to claim 1, **characterised in that** the glass transition temperature of the intermediate layer (16) is less than or equal to -10°C, and in particular less than or equal to -20°C.

3. Multilayer laminate according to claim 1 or 2, **characterised in that** the glass transition temperature of the intermediate layer (16) is greater than or equal to - 70°C, in particular greater than or equal to -60°C.

4. Multilayer laminate according to any of the preceding claims, **characterised in that** the glass transition temperature of at least one of the adhesive substance layers (12, 14) is less than or equal to +10°C, in particular less than or equal to 0°C, and in particular less than or equal to -20°C, in particular less than or equal to -30°C.

5. Multilayer laminate according to any of the preceding claims, **characterised in that** the glass transition temperature of at least one of the adhesive substance layers (12, 14) is greater than or equal to -70°C.

6. Multilayer laminate according to claim 1, **characterised in that** the glass transition temperature of the intermediate layer (16) deviates from the glass transition temperature measured to ASTM 3418/2 of at least one of the adhesive substance layers (12, 14) by only between 0-30K, preferably 0-20K, and in particular 0-10K.

7. Multilayer laminate according to any of the preceding claims, **characterised in that** the binder of the intermediate layer (16) is (poly-)acrylate, (poly-)urethane, isocyanate, epoxide, amine, (poly-)ester, (poly-)alcohols, (poly-)carbonic acids or mixtures thereof.

8. Multilayer laminate according to any of the preceding claims, **characterised in that** the layer thickness of the adhesive substance layers (12, 14) is 1-100 µm, preferably at least 3 µm, and further preferably at least 5 µm, and the maximum layer thickness is preferably less than 60 µm and further preferably less than 40 µm.

9. Multilayer laminate according to any of the preceding claims, **characterised in that** the layer thickness of the intermediate layer (16) is 1-100 µm, preferably at least 2 µm, and further preferably at least 4 µm, and the maximum layer thickness is preferably less than 50 µm and further preferably less than 30 µm.

10. Multilayer laminate according to any of the preceding claims, **characterised in that** the laminate (10), consisting of the facestock material and the adhesive substance layers and the intermediate layer (16), has a total thickness of 25 µm to 2 mm, preferably 30 µm to 500 µm, and particularly preferably 40 µm to 250 µm.

11. Multilayer laminate according to any of the preceding claims, **characterised in that** the adhesive substance composition of one or both adhesive substance layers, preferably the adhesive substance layer which is not connected to the facestock material, has one or more synthetic and/or natural polymers as an adhesive substance polymer, and in particular tackifiers, antioxidants, fillers, colorants, thickeners and/or levelling agents.

12. Multilayer laminate according to any of the preceding claims, **characterised in that** the adhesive substance composition consists to at least 40%, preferably at least 60% and further preferably at least 70%, of one or more adhesive substance polymers.

13. Multilayer laminate according to any of the preceding claims, **characterised in that** the laminate (10) has further layers, in particular a detachable anti-adhesion layer (3) on the one free side of the adhesive substance layers (12, 14).

14. Multilayer laminate according to any of the preceding claims, **characterised in that** the facestock material (1) is inseparably connected to the adjacent adhesive substance layer.

15. Multilayer laminate according to any of the preceding claims, **characterised in that** the facestock material (1) has a thickness of maximum 200 µm.

16. Multilayer laminate according to any of the preceding claims, **characterised in that** the laminate (10) can be produced by layering the adhesive substance compositions and the intermediate layer composition using a multiple cascade nozzle in one process step.

17. Multilayer laminate according to any of the preceding claims, **characterised in that** the adhesive substance composition and the intermediate layer composition are present as aqueous dispersions, solutions or liquid 100% systems.

18. Method for production of a multilayer laminate according to any of the preceding claims from at least one facestock material (10) and two adhesive substance layers (12, 14), wherein the adhesive substance layers (12, 14) each comprise an adhesive substance composition, **characterised in that** an intermediate layer composition between the adhesive substance layers (12, 14) comprises one or more binders, and the intermediate layer (16) has a glass transition temperature of less than 0°C.

19. Use of a multilayer laminate according to any of the preceding claims as a label or as an adhesive tape or an adhesive film.

## Revendications

1. Stratifié multicouche (10) constitué d'un matériau visible (1) comprenant un film ou un papier et d'au moins deux couches d'adhésif (12, 14), dans lequel les couches d'adhésif (12, 14) comprennent respectivement une composition d'adhésif, **caractérisé en ce qu'**une couche intermédiaire est agencée entre les couches d'adhésif (12, 14), dans lequel la couche intermédiaire (16) comprend une composition de couche intermédiaire avec un ou plusieurs liant(s), et **en ce que** la couche intermédiaire présente une température de transition vitreuse, mesurée conformément à la norme ASTM D 3418/82, inférieure à 0°C, dans lequel les liants sont des élastomères et le au moins un liant de la couche intermédiaire (16) ne colle pas à une température ambiante de 21°C et la couche intermédiaire (16) est réalisée de manière non adhésive.

2. Stratifié multicouche selon la revendication 1, **caractérisé en ce que** la température de transition vitreuse de la couche intermédiaire (16) est inférieure ou égale à -10°C, et de manière particulièrement préférée inférieure ou égale à -20°C.

3. Stratifié multicouche selon la revendication 1 ou 2, **caractérisé en ce que** la température de transition vitreuse de la couche intermédiaire (16) est supérieure ou égale à -70°C, de manière particulièrement préférée supérieure ou égale à -60°C.

4. Stratifié multicouche selon l'une quelconque des revendications précédentes, **caractérisé en ce que** la température de transition vitreuse d'au moins une des couches d'adhésif (12, 14) est inférieure ou égale à +10°C, et de manière particulièrement préférée inférieure ou égale à 0°C et de manière plus particulièrement préférée inférieure ou égale à -20°C, de la manière la plus particulièrement préférée inférieure ou égale à -30°C.

5. Stratifié multicouche selon l'une quelconque des revendications précédentes, **caractérisé en ce que** la température de transition vitreuse d'au moins une des couches d'adhésif (12, 14) est supérieure ou égale à -70°C.

6. Stratifié multicouche selon la revendication 1, **caractérisé en ce que** la température de transition vitreuse de la couche intermédiaire (16) s'écarte un peu de la température de transition vitreuse, mesurée conformément à la norme ASTM 3418/82, d'au moins une des couches d'adhésif (12, 14) à concurrence d'une valeur comprise entre 0 et 30K et de manière préférée comprise entre 0 et 20K et de manière particulièrement préférée comprise entre 0 et 10 K.

7. Stratifié multicouche selon l'une quelconque des revendications précédentes, **caractérisé en ce que** des (poly)acrylates, des (poly)uréthanes, des isocyanates, des époxydes, des aminés, des (poly)esters, des (poly)alcools, des acides (poly)carboxyliques ou des mélanges de ceux-ci sont prévus en tant que liants de la couche intermédiaire (16).

8. Stratifié multicouche selon l'une quelconque des revendications précédentes, **caractérisé en ce que** l'épaisseur de couche des couches d'adhésif (12, 14) est comprise entre 1 et 100 µm, est de manière préférée d'au moins 3 µm et de manière plus préférée d'au moins 5 µm, et l'épaisseur maximale de couche est de manière préférée inférieure à 60 µm et de manière plus préférée inférieure de 40 µm.

9. Stratifié multicouche selon l'une quelconque des revendications précédentes, **caractérisé en ce que** l'épaisseur de couche de la couche intermédiaire (16) est comprise entre 1 et 100 µm, est de manière préférée d'au moins 2 µm et de manière plus préférée d'au moins 4 µm et l'épaisseur maximale de couche est de manière préférée inférieure à 50 µm et de manière plus préférée inférieure à 30 µm.

10. Stratifié multicouche selon l'une quelconque des revendications précédentes, **caractérisé en ce que** le stratifié (10) comprenant le matériau visible ainsi que les couches d'adhésif et la couche intermédiaire (16) présente au total une épaisseur comprise entre 25 µm et 2 mm, de manière préférée comprise entre 30 µm et 500 µm et de manière particulièrement préférée comprise entre 40 µm et 250 µm.

11. Stratifié multicouche selon l'une quelconque des revendications précédentes, **caractérisé en ce que** la composition d'adhésif d'une ou des deux couche(s) d'adhésif, de manière préférée de la couche d'adhésif qui n'est pas reliée au matériau visible, présente un ou plusieurs polymère(s) synthétique(s) et/ou naturel(s) en tant que polymère adhésif, ainsi que de manière particulièrement préférée des résines tackifiantes, des antioxydants, des charges, des colorants, des épaississants et/ou des adjuvants rhéologiques.

12. Stratifié multicouche selon l'une quelconque des revendications précédentes, **caractérisé en ce que** la composition d'adhésif comprend au moins 40%, de manière préférée au moins 60% et de manière plus préférée au moins 70% d'un ou plusieurs polymère(s) adhésif(s).

13. Stratifié multicouche selon l'une quelconque des revendications précédentes, **caractérisé en ce que** le stratifié (10) possède d'autres couches, en particulier une couche antiadhésive amovible (3) sur les faces libres des couches d'adhésif (12, 14).

14. Stratifié multicouche selon l'une quelconque des revendications précédentes, **caractérisé en ce que** le matériau visible (1) est relié de manière permanente à la couche d'adhésif adjacente.

15. Stratifié multicouche selon l'une quelconque des revendications précédentes, **caractérisé en ce que** le matériau visible (1) présente une épaisseur maximale de 200 µm.

16. Stratifié multicouche selon l'une quelconque des revendications précédentes, **caractérisé en ce que** le stratifié (10) peut être produit par enduction des compositions d'adhésif et de la composition de couche intermédiaire avec une buse multiple en cascade au cours d'une étape de procédé.

17. Stratifié multicouche selon l'une quelconque des revendications précédentes, **caractérisé en ce que** la composition d'adhésif et la composition de couche intermédiaire sont présentes sous forme de dispersion aqueuse, de solution ou de système 100% liquide.

18. Procédé de production d'un stratifié multicouche selon l'une quelconque des revendications précédentes constitué d'au moins un matériau visible (10) et de deux couches d'adhésif (12, 14), dans lequel les couches d'adhésif (12, 14) comprennent respectivement une composition d'adhésif, **caractérisé en ce qu'**une composition de couche intermédiaire avec un ou plusieurs liant(s) est comprise entre les couches d'adhésif (12, 14), et la couche intermédiaire (16) présente une température de transition vitreuse inférieure à 0°C.

19. Utilisation d'un stratifié multicouche selon l'une quelconque des revendications précédentes en tant qu'étiquette ou en tant que ruban adhésif ou en tant que film adhésif.
